# EUROPÄISCHE PATENTANMELDUNG

(11) **EP 1 895 329 A2**
(43) Veröffentlichungstag der Anmeldung: **05.03.2008**
(21) Anmeldenummer: 07014249.2
(22) Anmeldetag: 20.07.2007
(51) Int. Cl.: G01V 8/10

(54) **Vorrichtung zur Erfassung von Objekten in einem Überwachungsbereich**

(30) Priorität: 02.09.2006 DE 102006041251
(71) Anmelder: Leuze lumiflex GmbH + Co. KG, 82256 Fürstenfeldbruck (DE)
(72) Erfinder: Lohmann, Lutz, Dr., 82140 Olching (DE)
(74) Vertreter: Ruckh, Rainer Gerhard

(57) **Zusammenfassung**

Die erfindungsgemäße Vorrichtung (1) weist wenigstens einen Sensor (3) zur Erfassung von Objekten innerhalb eines einer Maschine (2)oder Anlage zugeordneten Überwachungsbereichs (4) auf. Mit der Maschine (2) oder Anlage ist wenigstens ein Konfigurationsmodul (9) fest verbunden, in welchem Konfigurationsdaten für den wenigstens einen Sensor (3) abgespeichert sind. Bei Anschluss des Sensors (3) an das wenigstens eine Konfigurationsmodul (9) sind die Konfigurationsdaten von diesem in den wenigstens einen Sensor (3) einlesbar.

## Beschreibung

Die Erfindung betrifft eine Vorrichtung zur Erfassung von Objekten in einem Überwachungsbereich.

Die Objekterfassung erfolgt mittels eines Sensors. Um den jeweiligen Sensor für eine bestimmte Applikation wie zum Beispiel der Durchführung spezifischer Überwachungsfunktionen an Maschinen und Anlagen einsetzen zu können muss dieser in einer vorgegebenen Weise parametriert werden. Wird bei einem Defekt eines Sensors ein Austausch dieses Sensors durch einen neuen erforderlich, so muss der neue Sensor in identischer Weise parametriert werden. Dies bedingt generell nicht nur einen erheblichen Zeitaufwand sondern stellt prinzipiell auch eine Fehlerquelle dar. Wird eine Parametrierung von einer Bedienperson nicht sorgfältig durchgeführt, so dass die Parametrierung des neuen Sensors nicht vollständig mit jener des alten auszutauschenden Sensors übereinstimmt, so kann es bei Betrieb des neuen Sensors zu Fehlfunktionen kommen.

Aus der DE 198 05 606 A1 ist ein Verfahren zum Konfigurieren von Sensoren bekannt, bei welchem Konfigurationsdaten, die eine bestehende Konfiguration eines Sensors enthalten, von einem Ausgangssensor in einen zu konfigurierenden Sensor übertragen werden. Hierbei wird der Ausgangssensor im nichtkonfigurierten oder im konfigurierten Zustand mit einem Modul verbunden, welches die aktuelle Konfiguration des Ausgangssensors sowie eine den Konfigurationsdaten entsprechende Kontrollsumme abspeichert. Anschließend wird das Modul mit dem zu konfigurierenden Sensor verbunden, die im Modul gespeicherten Daten werden in den zu konfigurierenden Sensor eingelesen und eine den eingelesenen Daten entsprechende Kontrollsumme wird berechnet, woraufhin die berechnete Kontrollsumme im Modul mit der in diesem gespeicherten Kontrollsumme verglichen und bei Nichtübereinstimmung der beiden Kontrollsummen eine Fehlermeldung erzeugt wird.

Vorteilhaft bei diesem Verfahren ist, dass durch das verwendete Modul Konfigurationsdaten komplett von einem Sensor in einen anderen übertragen werden können, was die Parametrierung eines Sensors erheblich erleichtert.

Nachteilig bei diesem Verfahren ist jedoch, dass es der Bedienperson, die die Parametrierung des Sensors vorbehalten ist, von welchem Sensor Konfigurationsdaten ausgelesen werden, um diese im jeweiligen Modul abzuspeichern. Dies stellt eine erhebliche Fehlerquelle dar, da bei der Parametrierung mittels des Moduls verschiedene Sensoren für unterschiedliche Applikationen verwechselt werden können. Dies ist insbesondere nachteilig bei Applikationen, in welchen Sensoren für Überwachungsfunktionen bei komplexen Maschinen und Anlagen eingesetzt werden. Dort wird eine Vielzahl von Sensoren eingesetzt, wobei die einzelnen Sensoren unterschiedliche Überwachungsfunktionen erfüllen müssen und daher in unterschiedlicher Weise parametriert werden müssen.

Der Erfindung liegt die Aufgabe zugrunde eine einfache, fehlersichere Parametrierung für Sensoren bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung weist wenigstens einen Sensor zur Erfassung von Objekten innerhalb eines einer Maschine oder Anlage zugeordneten Überwachungsbereichs auf. Mit der Maschine oder Anlage ist wenigstens ein Konfigurationsmodul fest verbunden, in welchem Konfigurationsdaten für den Sensor abgespeichert sind. Bei Anschluss des Sensors an das Konfigurationsmodul sind die Konfigurationsdaten von diesem in den Sensor einlesbar.

Ein wesentlicher Vorteil der erfindungsgemäßen Vorrichtung besteht darin, dass eine feste mechanische Verbindung eines Konfigurationsdaten enthaltenden Konfigurationsmoduls zu einer Anlage oder Maschine besteht. Damit besteht eine feste Zuordnung von im Konfigurationsmodul enthaltenen, insbesondere maschinen- oder anlagenspezifischen Konfigurationsdaten zu der jeweiligen Anlage der Maschine. Durch diese feste Zuordnung sind Verwechslungen bei der Parametrierung das heißt Konfigurierung von Sensoren mit hoher Sicherheit ausgeschlossen. Zur Parametrierung eines Sensors wird dieser direkt an das mit der Maschine oder Anlage verbundene Konfigurationsmodul angeschlossen, damit der Sensor aus diesem Konfigurationsmodul die Konfigurationsdaten übernehmen kann. Da somit der Sensor mittels des Konfigurationsmoduls am Einsatzort an der Maschine oder Anlage konfiguriert wird, ist eine Übernahme von nicht an die Maschine oder Anlage angepassten Konfigurationsdaten mit hoher Sicherheit ausgeschlossen.

Auch ein Austausch eines defekten Sensors durch einen neuen Sensor kann auf diese Weise ohne Gefahr von Verwechslungen durchgeführt werden. Hierzu braucht der defekte Sensor lediglich vom Konfigurationsmodul abgenommen und dort durch den neuen Sensor ersetzt werden. Der neue Sensor übernimmt dann in gleicher Weise wie der alte Sensor die Konfigurationsdaten aus dem Konfigurationsmodul, wodurch gewährleistet ist, dass der neue Sensor dieselbe Konfiguration wie der alte Sensor aufweist. Durch die feste mechanische Verbindung zwischen dem Konfigurationsmodul und der Maschine oder Anlage ist gewährleistet, dass der neue wie der alte Sensor die richtigen, an die Maschine oder Anlage angepassten Konfigurationsdaten erhält.

Prinzipiell können vor Inbetriebnahme der Vorrichtung in das Konfigurationsmodul die jeweiligen Konfigurationsdaten eingelesen und dort abgespeichert werden. In der nachfolgenden Betriebsphase der Vorrichtung übernimmt dann der jeweils an das Konfigurationsmodul angeschlossene Sensor die Konfigurationsdaten aus dem Konfigurationsmodul. Generell können auch bei einem erstmaligen Anschluss eines Sensors dessen Konfigurationsdaten in das Konfigurationsmodul eingelesen und abgespeichert werden. Bei einem Austausch des Sensors durch einen neuen Sensor kann dann der neue Sensor die Konfigurationsdaten des alten Sensors übernehmen.

Die feste mechanische Zuordnung des Konfigurationsmoduls zur jeweiligen Maschine wird besonders vorteilhaft durch eine Kabelverbindung realisiert, wobei das Konfigurationsmodul im Kabel selbst oder in einem am Kabel angebrachten Stecker integriert ist.

Die Integration des Konfigurationsmoduls in einem Kabel oder Stecker stellt eine besonders einfache sowie platzsparende Anbringung des Konfigurationsmoduls dar.

Weiterhin kann das Konfigurationsmodul auch einen Busanschluss aufweisen, so dass das Konfigurationsmodul über ein Bussystem mit der jeweiligen Maschine oder Anlage fest verbunden ist. Diese Ausführungsform eignet sind insbesondere für komplexe Anwendungsfälle, beispielsweise für Anlagen, an welchen eine Vielzahl von Sensoren zu Überwachungszwecken benötigt werden. Auch in diesem Fall kann das Konfigurationsmodul platzsparend in einem Stecker integriert sein.

In der einfachsten Ausgestaltung der Erfindung umfasst die Vorrichtung ein Konfigurationsmodul, welches mechanisch fest mit einer Maschine oder Anlage verbunden ist. Generell können auch an einer Maschine oder Anlage mehrere, jeweils über eine feste mechanische Verbindung wie einem Kabel an diese gekoppelte Konfigurationsmodule vorgesehen sein, in welchen jeweils spezifische Konfigurationsdaten abgespeichert sind, mittels derer dort anzuschließende Sensoren konfiguriert werden können. In den einzelnen Konfigurationsmodulen können insbesondere unterschiedliche, vorzugsweise maschinen- oder anlagespezifische Konfigurationsdaten hinterlegt sein, so dass die Sensoren entsprechend ihrem Anbringungsort an der Maschine oder Anlage individuell konfiguriert werden können.

Die Sensoren sind insbesondere als optische Sensoren, insbesondere Flächendistanzsensoren oder Lichtgitter ausgebildet. Vorteilhaft bilden die Sensoren dabei Sicherheitssensoren, die sicherheitstechnisch so ausgebildet sind, dass sie im Bereich des Personenschutzes eingesetzt werden können.

Die Erfindung wird im Nachstehenden anhand der Zeichnungen erläutert.
- Figur 1:: Schematische Darstellung eines Ausführungsbeispiels einer Vorrichtung zur Absicherung eines Gefahrenbereichs an einer Maschine.
- Figur 2:: Schematische Darstellung eines als Flächendistanzsensor ausgebildeten Sensors für die Vorrichtung gemäß Figur 1.
- Figur 3:: Schematische Darstellung eines als Lichtgitter ausgebildeten Sensors für die Vorrichtung gemäß Figur 1.
- Figur 4:: Variante der Vorrichtung gemäß Figur 1.

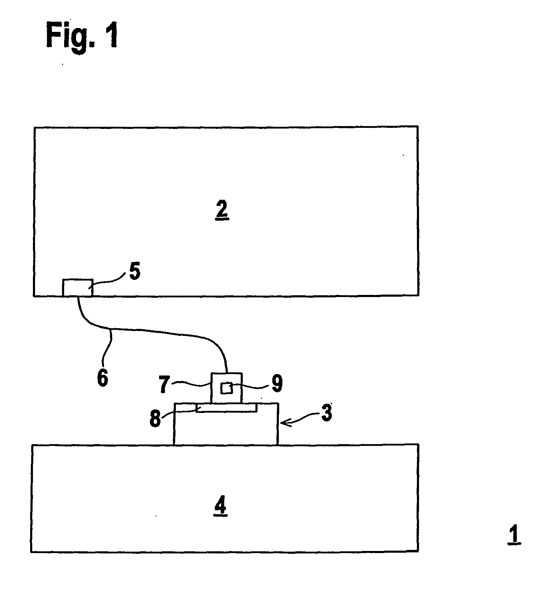

Figur 1 zeigt schematisch eine Vorrichtung 1 zur Gefahrenbereichsabsicherung an einer Maschine 2. Die Maschine 2 kann als Presse oder dergleichen ausgebildet sein, wobei generell innerhalb eines Gefahrenbereichs im Vorfeld vor der Maschine 2 durch deren Arbeitsbewegungen Gefahren für Personen entstehen können. Um Gefährdungen für Personen ausschließen zu können wird der Gefahrenbereich mittels eines optischen Sensors 3 überwacht. Mit dem optischen Sensor 3 erfolgt dabei eine Objekterfassung innerhalb eines Überwachungsbereichs 4, dessen Größe an die Ausdehnung des Gefahrenbereichs angepasst ist. Wird mittels des optischen Sensors 3 innerhalb des Überwachungsbereichs ein Objekteingriff registriert, wird im optischen Sensor 3 ein entsprechendes Objektfeststellungssignal generiert, welches als Steuersignal für die Maschine 2 derart dient, dass die Maschine 2 zur Gefahrenvermeidung abgeschaltet wird.

Zur Ankopplung des optischen Sensors 3 an die Maschine ist eine Kabelverbindung vorgesehen. An der Maschine 2 selbst ist eine Steckverbindung 5 zum Anschluss eines Kabels 6 vorgesehen. Am freien Ende des Kabels 6 ist ein Stecker 7 zum Anschluss des optischen Sensors 3 vorgesehen. Der optische Sensor 3 weist hierzu eine Buchse 8 oder dergleichen auf, die mit dem Stecker 7 kontaktiert werden kann.

In dem Stecker 7 ist ein Konfigurationsmodul 9 integriert. Das Konfigurationsmodul 9 umfasst im wesentlichen eine Speichereinheit, die vorzugsweise von einem nicht flüchtigen Speicher gebildet ist. Alternativ kann das Konfigurationsmodul 9 direkt im Kabel 6 integriert sein.

Im einfachsten Fall ist dabei das Konfigurationsmodul 9 allein von einem nicht flüchtigen Datenspeicher wie einem EEPROM gebildet, das heißt ohne eigene Intelligenz, das heißt ohne eigene Rechnereinheit.

Das Auslesen oder Einlesen von Daten erfolgt damit über die im optischen Sensor 3 integrierten Rechnereinheiten. Der nicht flüchtige Datenspeicher wird dabei durch eine Standardspeicherschnittstelle gelesen oder beschrieben, wobei die Schnittstelle hierfür vorzugsweise vier Pins zur Übertragung der Versorgungsspannung und der Daten sowie für eine Taktleitung zum Datenspeicher aufweist.

In dem Konfigurationsmodul 9 sind Konfigurationsdaten hinterlegt. Diese Konfigurationsdaten enthalten eine für die vorgegebene Applikation, im vorliegenden Fall für die Gefahrenbereichsabsicherung an der Maschine 2 spezifische Daten, die den Betrieb des optischen Sensors 3 festlegen und definieren. Durch die Integration des Konfigurationsmoduls 9 im Stecker 7 und die Kabelverbindung des Steckers 7 zur Maschine 2 ist eine feste mechanische Verbindung des Konfigurationsmoduls 9 zur Maschine 2 gegeben.

Die Konfigurierung des optischen Sensors 3 kann somit selbsttätig bei Anschluss an den Stecker 7 erfolgen. Sobald der Kontakt des optischen Sensors 3 zum Stecker 7 hergestellt ist übernimmt der optische Sensor 3 die Konfigurationsdaten aus dem Konfigurationsmodul 9 und ist damit ohne weitere Einstellvorgänge betriebsbereit. Vorzugsweise wird hierzu nach Einschalten des optischen Sensors 3 in diesem geprüft, ob ein Konfigurationsspeicher angeschlossen ist oder nicht. Dementsprechend werden nach Einschalten des optischen Sensors 3 von den in diesem integrierten Rechnereinheiten Daten aus dem Konfigurationsmodul 9 eingelesen oder nicht. Durch die mechanische Verbindung des Konfigurationsmoduls 9 zur Maschine 2 ist eine feste Zuordnung des Konfigurationsmoduls 9 zur Maschine 2 gegeben. Dadurch ist eine fehlerhafte Konfigurierung des optischen Sensors 3 ausgeschlossen. Insbesondere können durch die feste Zuordnung des Konfigurationsmoduls 9 zur Maschine Verwechslungen bei der Konfigurierung von optischen Sensoren 3 ausgeschlossen werden. Dies ist insbesondere bei einem Austausch von optischen Sensoren 3 der Fall. Muss beispielsweise ein zur Gefahrenbereichsüberwachung an der Maschine 2 eingesetzter optischer Sensor 3 infolge eines Defekts durch einen neuen optischen Sensor 3 ausgetauscht werden, so wird der alte optische Sensor 3 vom Stecker 7 abgenommen und dort durch den neuen optischen Sensor 3 ersetzt. Dieser übernimmt in gleicher Weise die Konfigurationsdaten aus dem Konfigurationsmodul 9 im Stecker 7, wodurch gewährleistet ist, das der neue optische Sensor 3 in gleicher Weise wie der alte optische Sensor 3 konfiguriert wird.

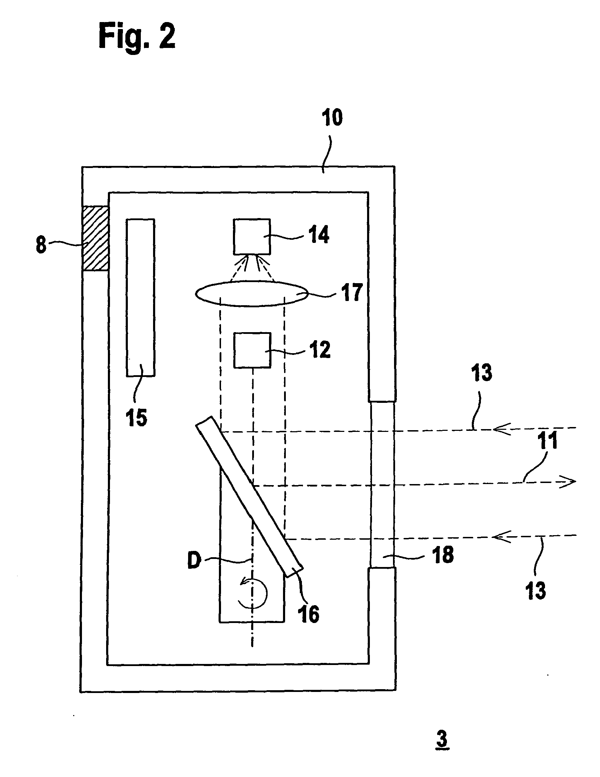

Figur 2 zeigt eine Ausführungsform des optischen Sensors 3, der für die Vorrichtung gemäß Figur 1 einsetzbar ist.

Der optische Sensor 3 ist als Flächendistanzsensor ausgebildet. Der Flächendistanzsensor ist in einem Gehäuse 10 integriert, wobei in einer Gehäusewand die Buchse 8 zum Anschluss des Steckers 7 integriert ist. Der Flächendistanzsensor umfasst als Distanzsensorelement einen Sendelichtstrahlen 11 emittierenden Sender 12 und einen Empfangslichtstrahlen 13 empfangenden Empfänger 14 als Lichtempfangseinheit. Die Distanzmessung erfolgt beispielsweise nach dem Laufzeitprinzip, das heißt der Sender 12 emittiert Sendelicht in Form kurzer Lichtpulse, deren Laufzeiten zu einem zu detektierenden Objekt und zurück zum Empfänger 14 als Maß für die Objektdistanz registriert und ausgewertet werden. Die Auswertung der am Ausgang des Empfängers 14 anstehenden Empfangssignale erfolgt in einer Auswerteeinheit 15. Zum Einsatz des optischen Sensors 3 im Bereich des Personenschutzes weist dieser eine redundant aufgebaute Auswerteeinheit 15 auf, beispielsweise in Form zweier sich gegenseitig zyklisch überwachender Microcontroller. Der Sensor 3 bildet damit einen Sicherheitssensor.

Weiterhin umfasst der optische Sensor 3 eine Ablenkeinheit in Form eines motorisch getriebenen, um eine Drehachse D drehbaren Umlenkspiegels 16. Der Sender 12 und der Empfänger 14 sind in der Drehachse D liegend angeordnet, wobei dem Empfänger 14 eine Empfangsoptik 17 vorgeordnet ist. Die Sendelichtstrahlen 11 und die Empfangslichtstrahlen 12 werden über den Umlenkspiegel 16 abgelenkt und so periodisch innerhalb eines in einer Ebene liegenden Erfassungsbereichs geführt. Der von den Sendelichtstrahlen 11 überstrichene Winkelbereich und damit die Größe des Erfassungsbereichs kann durch eine geeignete Dimensionierung der Breite eines Austrittsfensters 18 im Gehäuse 10, durch welches die Sendelichtstrahlen 11 und Empfangslichtstrahlen 13 geführt werden, vorgegeben werden.

Innerhalb des Erfassungsbereichs kann eine den Überwachungsbereich 4 bildende Schutzzone definiert werden. Die Schutzzone kann durch Parameterwerte definiert werden, welche beispielsweise von den Rändern der Schutzzone gebildet sind. Der Betrieb des Flächendistanzsensors erfolgt dann derart, dass in der Auswerteeinheit 15 in Abhängigkeit davon, ob innerhalb der Schutzzone ein Objekt detektiert wird oder nicht, als Objektfeststellungssignal ein binäres Schaltsignal generiert wird, das zur Steuerung der Maschine 2 verwendet wird. Dabei wird die Maschine 2 abgeschaltet, wenn innerhalb der Schutzzone ein Objekt erfasst wird.

Die die Schutzzone definierenden Parameter bilden maschinenspezifische Konfigurationsdaten, die im Konfigurationsmodul 9 abgespeichert sind und bei Anschluss des optischen Sensors 3 an den Stecker 7 aus dem Konfigurationsmodul 9 ausgelesen werden.

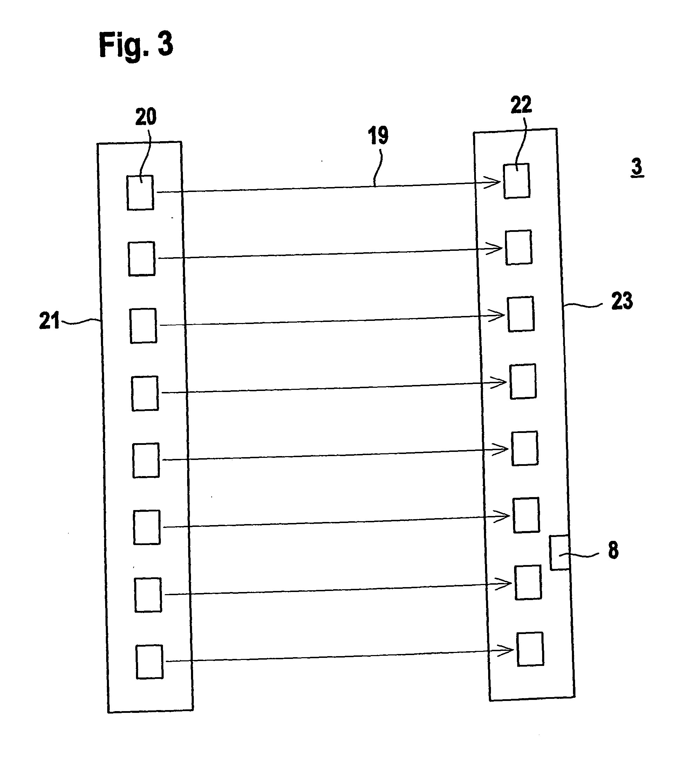

Figur 3 zeigt schematisch einen als Lichtgitter ausgebildeten optischen Sensor 3. Das Lichtgitter umfasst eine Reihenanordnung von Lichtstrahlen 19 emittierenden Sendelementen 20 in einem ersten Gehäuse 21 und eine entsprechende Reihenanordnung von Lichtstrahlen empfangenden Empfangselementen 22 in einem zweiten Gehäuse 23. Die Sendeelemente 20 werden vorzugsweise zyklisch über eine nicht dargestellte Sendeeinheit aktiviert, die Empfänger 14 werden im selben Takt zyklisch über eine Empfängereinheit aktiviert. Die Synchronisierung der Sender- und Empfängeraktivierung erfolgt auf optischem Weg über die von den Sendelementen 20 zu den Empfangselementen 22 geführten Lichtstrahlen 19. Dabei sind die Lichtstrahlen 19 jeweils eines Sendelements 20 auf das gegenüber liegende Empfangselement 22 geführt. Die so gebildeten Paare von Sendeelementen 20 und Empfangselementen 22 bilden Strahlachsen des Lichtgitters, wobei die Lichtstrahlen 19 der Strahlachsen den Erfassungsbereich bilden, innerhalb dessen Objekte erfassbar sind. Die Generierung eines Objektfeststellungssignals erfolgt in der Empfängereinheit in Abhängigkeit der Empfangssignale an den Ausgängen der Empfangselemente 22. Ein Objekt gilt als erkannt wenn wenigstens eine der Strahlachsen unterbunden ist. Die Empfängereinheit bildet somit eine Auswerteeinheit 15 zur Auswertung der Empfangssignale des Lichtgitters. Zum Einsatz im Bereich des Personenschutzes ist das Lichtgitter als Sicherheitssensor ausgebildet. Hierzu weist die Auswerteeinheit 15 einen redundanten Aufbau auf, vorzugsweise in Form zweier sich gegenseitig zyklisch überwachender Microcontroller.

Je nach Applikation, das heißt in Abhängigkeit der Gegebenheiten an der mit dem Lichtgitter zu überwachenden Maschine 2, kann der Überwachungsbereich 4 von sämtlichen Strahlachsen des Lichtgitters oder nur einem Teil der Strahlachsen gebildet sein. Im letzteren Fall erfolgt ein Blanking des Lichtgitters derart, dass bestimmte Strahlachsen derart deaktiviert werden, dass ein Objekteingriff innerhalb dieser Strahlachsen nicht zu einer Objektmeldung und damit nicht zu einem Abschalten der Maschine 2 führt. Die Vorgabe derartiger Blanking-Bereiche erfolgt durch Parameterwerte, die als Konfigurationsdaten in dem Konfigurationsmodul 9 hinterlegt werden können. Die zum Anschluss des Steckers 7 mit dem Konfigurationsmodul 9 dienende Buchse 8 ist in einer Gehäusewand des Gehäuses 23 integriert.

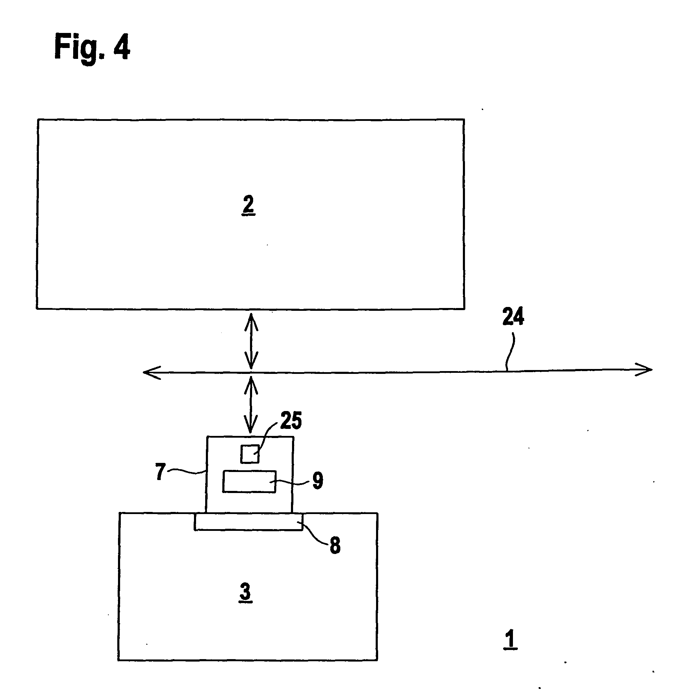

Figur 4 zeigt eine Variante der Vorrichtung 1 gemäß Figur 1. Analog zur Ausführungsform gemäß Figur 1 ist auch bei dem Ausführungsbeispiel gemäß Figur 4 ein in einem Stecker 7 integriertes Konfigurationsmodul 9 über eine feste mechanische Verbindung mit einer Maschine 2 verbunden. An den Stecker 7 kann wiederum ein optischer Sensor 3 angeschlossen werden, der zur Gefahrenbereichsüberwachung eingesetzt wird und welcher eine Buchse 8 zum Anschluss an den Stecker 7 aufweist. Bei Anschluss des optischen Sensors 3 an den Stecker 7 werden zur Konfigurierung des optischen Sensors 3 wiederum Konfigurationsdaten aus dem Konfigurationsmodul 9 in den optischen Sensor 3 übertragen. Im Unterschied zur Ausführungsform gemäß Figur 1 wird in diesem Fall mittels Busleitungen 24 eine Verbindung zwischen dem Konfigurationsmodul 9 und der Maschine 2 hergestellt. Hierzu ist im Stecker 7 ein Busanschluss 25 zum Anschluss an die Busleitungen 24 vorgesehen. Die Maschine 2 und der über den Stecker 7 angeschlossene optische Sensor 3 bilden somit Teilnehmer eines Bussystems. Die Konfiguration gemäß Figur 4 eignet sich insbesondere für komplexe Systeme, bei welchen gegebenenfalls mehrere optische Sensoren 3 zur Überwachung einer oder mehrerer Maschinen oder Anlagen eingesetzt werden.

### Bezugszeichenliste

- (1): Vorrichtung
- (2): Maschine
- (3): optischer Sensor
- (4): Überwachungsbereich
- (5): Steckverbindung
- (6): Kabel
- (7): Stecker
- (8): Buchse
- (9): Konfigurationsmodul
- (10): Gehäuse
- (11): Sendelichtstrahlen
- (12): Sender
- (13): Empfangslichtstrahlen
- (14): Empfänger
- (15): Auswerteeinheit
- (16): Umlenkspiegel
- (17): Empfangsoptik
- (18): Austrittsfenster
- (19): Lichtstrahlen
- (20): Sendeelement
- (21): Gehäuse
- (22): Empfangselement
- (23): Gehäuse
- (24): Busleitung
- (25): Busanschluss
- (D): Drehachse

## Patentansprüche

1. Vorrichtung (1) mit wenigstens einem Sensor (3) zur Erfassung von Objekten innerhalb eines einer Maschine (2) oder Anlage zugeordneten Überwachungsbereichs (4), **dadurch gekennzeichnet, dass** mit der Maschine (2) oder Anlage wenigstens ein Konfigurationsmodul (9) fest verbunden ist, in welchem Konfigurationsdaten für den wenigstens einen Sensor (3) abgespeichert sind, wobei bei Anschluss des Sensors (3) an das wenigstens eine Konfigurationsmodul (9) die Konfigurationsdaten von diesem in den wenigstens einen Sensor (3) einlesbar sind.

2. Vorrichtung (1) nach Anspruch 1, **dadurch gekennzeichnet, dass** das Konfigurationsmodul (9) in einem Kabel (6) integriert ist.

3. Vorrichtung (1) nach Anspruch 1, **dadurch gekennzeichnet, dass** das Konfigurationsmodul (9) in einem Stecker (7) integriert ist.

4. Vorrichtung (1) nach Anspruch 3, **dadurch gekennzeichnet, dass** das Konfigurationsmodul (9) allein von einem nicht flüchtigen Datenspeicher gebildet ist.

5. Vorrichtung (1) nach einem der Ansprüche 3 oder 4, **dadurch gekennzeichnet, dass** der das Konfigurationsmodul (9) enthaltende Stecker (7) über ein Kabel (6) direkt an die Maschine (2) angeschlossen ist.

6. Vorrichtung (1) nach Anspruch 3, **dadurch gekennzeichnet, dass** der das Konfigurationsmodul (9) enthaltende Stecker (7) einen Busanschluss (25) zum Anschluss an ein Bussystem, an welches auch die Maschine (2) oder Anlage angeschlossen ist, aufweist.

7. Vorrichtung (1) nach einem der Ansprüche 1 bis 6, **dadurch gekennzeichnet, dass** während des Betriebs eines an das Konfigurationsmodul (9) angeschlossenen Sensors (3) von diesem Konfigurationsdaten in diesen einlesbar sind.

8. Vorrichtung (1) nach Anspruch 7, **dadurch gekennzeichnet, dass** bei Austausch eines neuen Sensors (3) gegen einen alten Sensor (3) die Konfigurationsdaten des alten Sensors vom neuen, an das Konfigurationsmodul (9) anzuschließenden Sensor (3) durch Auslesen der Konfigurationsdaten aus dem Konfigurationsmodul (9) übernommen werden.

9. Vorrichtung (1) nach einem der Ansprüche 1 bis 8, **dadurch gekennzeichnet, dass** die Konfigurationsdaten von sensorspezifischen Parameterwerten gebildet sind.

10. Vorrichtung (1) nach einem der Ansprüche 1 bis 9, **dadurch gekennzeichnet, dass** die Konfigurationsdaten für die jeweils zugeordnete Maschine (2) oder Anlage spezifische Informationen enthalten.

11. Vorrichtung (1) nach einem der Ansprüche 1 bis 10, **dadurch gekennzeichnet, dass** der Sensor (3) als optischer Sensor ausgebildet ist.

12. Vorrichtung (1) nach einem der Ansprüche 1 bis 11, **dadurch gekennzeichnet, dass** der Sensor (3) als Sicherheitssensor ausgebildet ist.
